# EUROPEAN PATENT SPECIFICATION

(11) **EP 2 797 364 B1**
(45) Date of publication and mention of the grant of the patent: **13.04.2016**
(21) Application number: 13305525.1
(22) Date of filing: 22.04.2013
(51) Int. Cl.: H04W 24/02, H04W 48/10

(54) **A METHOD FOR ALLOCATION OF FREQUENCY RESOURCES OF DIFFERENT OPERATORS TO USER TERMINALS, AND A BASE STATION AND A USER TERMINAL THEREFOR**
VERFAHREN ZUR ZUWEISUNG VON FREQUENZRESSOURCEN UNTERSCHIEDLICHER BETREIBER AN BENUTZERENDGERÄTE UND BASISSTATION UND BENUTZERENDGERÄT DAFÜR
PROCÉDÉ D'ATTRIBUTION DE RESSOURCES DE FRÉQUENCE DE DIFFÉRENTS OPÉRATEURS À DES TERMINAUX D'UTILISATEUR, STATION DE BASE ET TERMINAL UTILISATEUR CORRESPONDANT

(43) Date of publication of application: 29.10.2014
(73) Proprietor: ALCATEL LUCENT, 92100 Boulogne-Billancourt (FR)
(72) Inventor: Aydin, Osman, 70569 Stuttgart (DE); Aziz, Danish, 70435 Stuttgart (DE); Bakker, Hajo, 71735 Eberdingen (DE)
(74) Representative: Kleinbub, Oliver

(56) References cited:
- MEDIATEK INC: "Cross-carrier scheduling for carrier-based HetNet ICIC", 3GPP DRAFT; R3-120173_CROSS-CARRIER SCHEDULING IN CARRIER-BASED HETNET ICIC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Dresden, Germany; 20120206 - 20120210, 31 January 2012 (2012-01-31), XP050566628, [retrieved on 2012-01-31]
- CATT: "Cross carrier scheduling for E-PDCCH", 3GPP DRAFT; R1-124767, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. New Orleans, USA; 20121112 - 20121116 3 November 2012 (2012-11-03), XP050662782, Retrieved from the Internet: URL:http://www.3gpp.org/ftp/tsg_ran/WG1_RL 1/TSGR1_71/Docs/ [retrieved on 2012-11-03]

## Description

### Field of the invention

The invention relates to a method for allocation of frequency resources of different operators to user terminals in a wireless communication network, and a base station and a user terminal adapted to perform said method.

### Background

Radio Access Network (RAN) sharing enables wireless network operators to share resources between different entities, as e.g. between wireless network operators, and thereby reduce their deployment costs. According to the Third Generation Partnership Project Long Term Evolution (3GPP LTE) standard, RAN sharing by multiple operators is supported, as e.g. described in the 3GPP technical report TR 36.300, chapter 10.1.7. To enable RAN sharing in LTE, each cell broadcasts the so-called Public Land Mobile Network identifier (PLMN ID) of each operator, whereby the PLMN IDs for all cells combined in a so-called tracking area are the same, as e.g. described in the 3GPP technical specification TS 23.251, chapter 4.2.2. RAN sharing is based on a multi-to-multi relationship between E-UTRAN nodes (E-UTRAN = Evolved Universal Telecommunications System Terrestrial Radio Access Network), i.e. so-called evolved Node Bs (eNBs), and Evolved Packet Core (EPC) nodes, as e.g. mobility management entities (MMEs), which is realized by the so-called S1-flex concept, as e.g. described in the 3GPP technical report TR 23.882, chapter 7.16.3. During attachment to the network, the user terminals of different operators which are served by the same shared eNB are assigned to different MMEs.

Document D1, MEDIATEK INC: "Cross-carrier scheduling for carrier-based HetNet ICIC", 3GPP DRAFT; R3-120173, 31 January 2012 discloses proposals for cross-carrier scheduling.

### Summary

The sharing of resources can be broadly categorized in three fields: Hard resource sharing, soft resource sharing and the combination of both. The first category refers to the mobile network infrastructure sharing, as e.g. the sharing of the base station, and/or the backhaul network, and/or the core network between the entities. The second category, the soft resources, refers to the sharing of licensed and/or unlicensed, as e.g. white space, frequency spectrum. The third category can share both hard and soft resources and may also have a common controlling/management of the resources. For example a shared radio access network will provide sharing of soft radio resources, as e.g bandwidth, the radio hardware, as e.g. a base station, and also the functional software modules like a scheduler. The combined sharing of both resource types is possible with the help of advanced MAC layer procedures (MAC = Medium Access Control) and RRM procedures (RRM = Radio Resource Management).

A combined sharing of resources can e.g. be realized in so called Heterogeneous Networks (HetNets). In heterogeneous network (HetNet) scenarios using standards like e.g. a 3GPP LTE standard, so-called pico base stations with their small cells are placed under the coverage of a so-called macro base station. A pico base station typically covers a small area e.g. in buildings, train stations or aircrafts due to its lower power, whereas a macro base station covers a larger area than a pico base station, as e.g. an outdoor area. Pico base stations enable a densification of a wireless cellular network by providing additional capacity to certain HotSpots.

In a HetNet scenario, an operator may deploy a small cell at a certain hotspot, e.g. a coffee shop, to offload traffic from its macro layer. Depending on the characteristics of this HotSpot different operators could profit from sharing their small cells and thereby reducing CAPEX and OPEX.

A possible scenario for resource sharing can be a third party, e.g. a shopping mall, an airport, an underground-parking, or a cinema, deploying its own small cell in the coverage area of macro cells, and different operators can take the services to serve their users in the coverage area of the small cell using resources of the small cell of the third party to build their own small cell.

In the following, 2 state of the art solutions for resource sharing between 2 operators with 2 small cells having an overlapping or equal coverage area is described.

Assuming that an operator OPA is using a frequency carrier in a frequency band FA. Likewise the other operator OPB is using a frequency carrier in frequency band FB.

State of the art solution with separate schedulers:
In this scenario, there are two separate schedulers in the small cells of the 2 operators OPA and OPB, enabling a kind of national roaming, as both frequency bands FA and FB allow access of user terminals with a subscription to operator OPA or operator OPB, as within the Broadcast Control Channel (BCCH) of both small cells, two operator IDs are included. This solution is not sufficient with respect to the efficient radio resource management, as no so-called resource pooling is used in the small cells.

State of the art solution with one scheduler and with carrier aggregation:
In this case, the operators OPA and OPB share the complete radio access network. With the help of so-called carrier aggregation, the two carriers, i.e. frequency bands FA and FB, can be combined in the small cell coverage area to serve the user terminals of both operators OPA and OPB using the aggregated frequency resources. For this purpose, only one carrier can be assigned as a so-called primary component carrier (PCC) and the other can be used as a so-called secondary component carrier (SCC). With the help of cross carrier scheduling, a common scheduler with a BCCH only on the PCC utilizes the complete spectrum and allocates the resource to the user terminals of both operators OPA and OPB. This solution is maybe sufficient with respect to the efficient radio resource management. However, it does not guarantee the fairness between the operators OPA and OPB. Let the carrier from the operator OPA be taken as PCC and the carrier from the operator OPB serve as SCC. In this case, the handover of user terminals of a macro cell of operator OPA to the small cell will be an intra-frequency handover, as broadcast and control channels are transmitted on the carrier of operator OPA in the small cell. On the other hand, the handover of user terminals of a macro cell of the operator OPB to the small cell will be an inter-frequency handover. Thus, the operator OPB has to bear high costs for the resource sharing by configuring its user terminals for inter-frequency measurements, i.e. measurement gaps are required for measurement of the frequency band FA of the other operator OPA.

The object of the invention is thus to propose a method for resource sharing between operators with a good and flexible usage of the common frequency resources and at the same time maintaining the fairness between both operators.

The basic idea of embodiments of the invention is to serve user terminals from at least two different operators based on an enhanced carrier aggregation principle preferably by one hardware platform, e.g. an LTE pico or macro base station. The hardware platform transmits at least two broadcast and control channels, as e.g. a so-called Physical Broadcast Channel (PBCH) and a Physical Downlink Control Channel (PDCCH), on at least two operator specific frequency bands and enables the scheduling of all user terminals independently of their operator subscription on the at least two frequency bands.

In a preferred embodiment, for two different operators, two PCC are used, one for each operator in a small cell coverage area, and a common hardware with two different cell IDs and two PBCHs for the two operators are used. Using the carrier aggregation and cross carrier scheduling, a common small cell scheduler will serve the user terminals of the two operators. With this method, the small cells of the two operators utilize the resource pooling, i.e. wider spectrum gain, and at the same time maintain the fairness between both operators. Due to the PCC on each carrier for each operator, user terminals in macro cells from either operator will perform simply an intra-frequency measurement and intra-frequency handover. In this way both operators will benefit from a wider spectrum and both will benefit from the reduced re-configurations on the Radio Resource Control (RRC) layer.

The object is thus achieved by a method for allocation of frequency resources of different operators to user terminals in a wireless communication network, wherein
- on at least one frequency resource of each operator of said different operators, an indication of said operator allowing user terminals registered at said operator to get access to a signaled cell is transmitted on a broadcast channel,
- user terminals receive control information only on frequency resources of an operator at which they are registered,
- and said control information comprises an indicator allocating to the user terminals at least one frequency resource of said frequency resources of an operator at which the user terminals are not registered.

The object of the invention is furthermore achieved by a base station for allocation of frequency resources of different operators to user terminals, wherein said base station is adapted
- to transmit on a broadcast channel on at least one frequency resource of each operator of said different operators an indication of said operator allowing user terminals registered at said operator to get access to a signaled cell,
- and to transmit control information to user terminals only on frequency resources of an operator at which said user terminals are registered, said control information comprising an indicator allocating to the user terminals at least one frequency resource of said frequency resources of an operator at which the user terminals are not registered.

The object of the invention is furthermore achieved by a user terminal to which frequency resources of different operators can be allocated, wherein said user terminal is adapted to
- receive on at least one frequency resource of an operator of said different operators at which the user terminal is registered an indication of said operator on a broadcast channel allowing the user terminal to get access to a signaled cell,
- and receive control information only on frequency resources of the operator at which the user terminal is registered, said control information comprising an indicator allocating to the user terminal at least one frequency resource of said frequency resources of an operator at which the user terminal is not registered.

The invention is described in the following within the framework of 3GPP LTE, however as the invention is not restricted to 3GPP LTE, but can in principle be applied in other networks that can apply a method for allocation of frequency resources of different operators to user terminals, like e.g. in WiMAX networks (WiMAX = Worldwide Interoperability for Microwave Access), in the following, instead of the term eNodeB used in LTE, the more general term base station is used.

Further developments of the invention can be gathered from the dependent claims and the following description.

### Brief description of the figures

In the following the invention will be explained further making reference to the attached drawings.
Fig. 1 schematically shows a communication network in which the invention can be implemented.
Fig. 2 schematically shows the structure of a user terminal and a base station in which the invention can be implemented.
Fig. 3 schematically shows state of the art resource sharing for two operators with separate schedulers.
Fig. 4 schematically shows state of the art resource sharing for two operators with one scheduler and carrier aggregation.
Fig. 5 schematically shows resource sharing for two operators with one scheduler, carrier aggregation, and separate broadcast and control channels according to an embodiment of the invention.

### Description of the embodiments

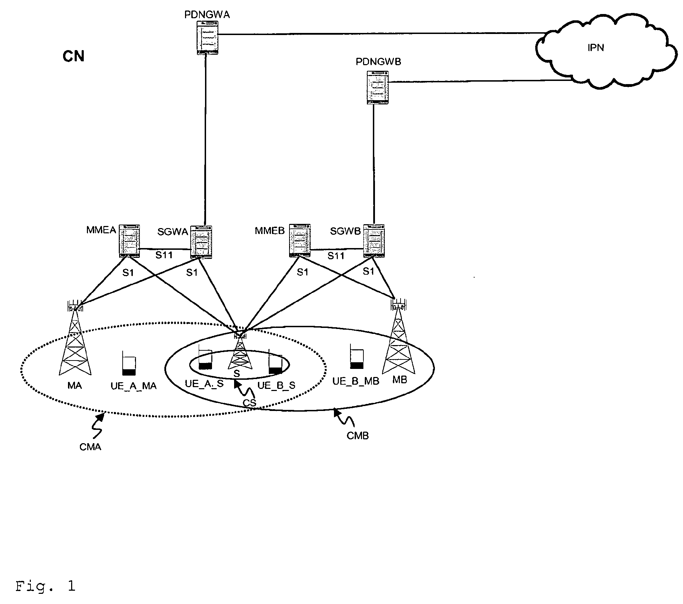

Fig. 1 shows as an example of a communication network in which the invention can be implemented a communication network CN according to the standard 3GPP LTE.

Said communication network CN comprises a macro base station MA of a first operator A, a macro base station MB of a second operator B, a pico base station S, a user terminal UE_A_MA registered with the first operator A and served by the macro base station MA of the first operator A, a user terminal UE_B_MB registered with the second operator B and served by the macro base station MB of the second operator B, a user terminal UE_A_S registered with the first operator A and served by the pico base station S, a user terminal UE_B_S registered with the second operator B and served by the pico base station S, serving gateways SGWA and SGWB of the first operator A and the second operator B respectively, packet data network gateways PDNGWA and PDNGWB of the first operator A and the second operator B respectively, and mobility management entities MMEA and MMEB of the first operator A and the second operator B respectively.

The user terminal UE_A_MA is connected via a radio connection to the macro base station MA, the user terminals UE_A_S and UE_B_S are connected via radio connections to the pico base station S, and the user terminal UE_B_MB is connected via a radio connection to the macro base station MB. In future evolutions of LTE, each of the user terminals UE_A_MA, UE_B_MB, UE_A_PB and UE_B_PB could also be connected via radio connections to multiple macro and/or pico base stations. The macro base station MA is in turn connected to the serving gateway SGWA and to the mobility management entity MMEA, i.e. to the evolved packet core (EPC) of operator A, via a so-called S1 interface. In the same way, the macro base station MB is connected to the serving gateway SGWB and to the mobility management entity MMEB, i.e. to the evolved packet core (EPC) of operator B, via an S1 interface. The pico base station S is connected to both the serving gateway SGWA and the mobility management entity MMEA of operator A, and the serving gateway SGWB and the mobility management entity MMEB of operator B.

The serving gateway SGWA is connected to the packet data network gateway PDNGWA, which is in turn connected to an external IP network IPN, and the serving gateway SGWB is connected to the packet data network gateway PDNGWB, which is in turn connected to the external IP network IPN. Furthermore, the serving gateway SGWA is connected to the mobility management entity MMEA via a so-called S11 interface, and the serving gateway SGWB is connected to the mobility management entity MMEB also via a so-called S11 interface.

The macro base stations MA and MB are connected to the pico base station S via a so-called X2 interface, which is not shown in fig. 1 for the sake of simplicity. The macro base stations MA and MB can be connected to the pico base station S via radio connections or via fixed line connections.

The S1 interface is a standardized interface between a base station, i.e. an eNodeB in this example, and the Evolved Packet Core (EPC). The S1 interface has two flavours, S1-MME for exchange of signalling messages between one of the base stations MA, MB, and S, and the respective mobility management entity MMEA or MMEB, and S1-U for the transport of user datagrams between one of the base stations MA, MB, and S, and the respective serving gateway SGWA and SGWB.

The X2 interface is added in 3GPP LTE standard primarily in order to transfer the user plane signal and the control plane signal during handover.

The serving gateways SGWA and SGWB perform routing of IP user data between a respective base stations MA, MB, or S, and the respective packet data network gateway PDNGWA or PDNGWB. Furthermore, the serving gateways SGWA and SGWB serve as a mobile anchor point during handover either between different base stations, or between different 3GPP access networks.

The packet data network gateways PDNGWA and PDNGWB represent the interface to the external IP network IPN and terminate the so-called EPS bearer (EPS = Evolved Packet System) which is established between a user terminal UE_A_MA, UE_B_MB, UE_A_S or UE_B_S and the respective serving macro base station MA or MB or pico base station S.

The mobility management entities MMEA and MMEB perform tasks of the subscriber management and the session management, and also perform the mobility management during handover between different access networks.

The pico base station S and the related coverage area CS of the pico cell are placed under the coverage area CMA of the macro base station MA and under the coverage area CMB of the macro base station MB.

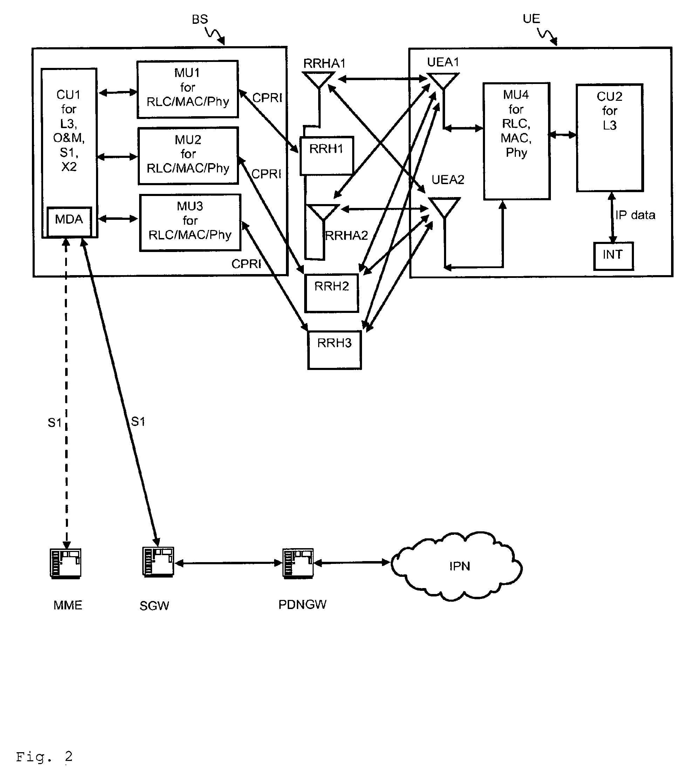

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and to a respective remote radio head RRH1, RRH2, or RRH3 via a so-called Common Public Radio Interface (CPRI).

Each of the remote radio heads RRH1, RRH2, and RRH3 is connected by way of example to two remote radio head antennas RRHA1 and RRHA2 for transmission and reception of data via a radio interface. Said two remote radio head antennas RRHA1 and RRHA2 are only depicted for the remote radio head RRH1 in fig. 2 for the sake of simplicity.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The remote radio heads RRH1, RRH2, and RRH3 comprise the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity to different media like e.g. fiber or electrical connection.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 over the Common Public Radio Interface to the respective remote radio head RRH1, RRH2, or RRH3, and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH1, RRH2, and RRH3 preferably via lossless fibre links that carry the CPRI data. This architecture reduces costs for service providers because only the remote radio heads RRH1, RRH2, and RRH3 containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

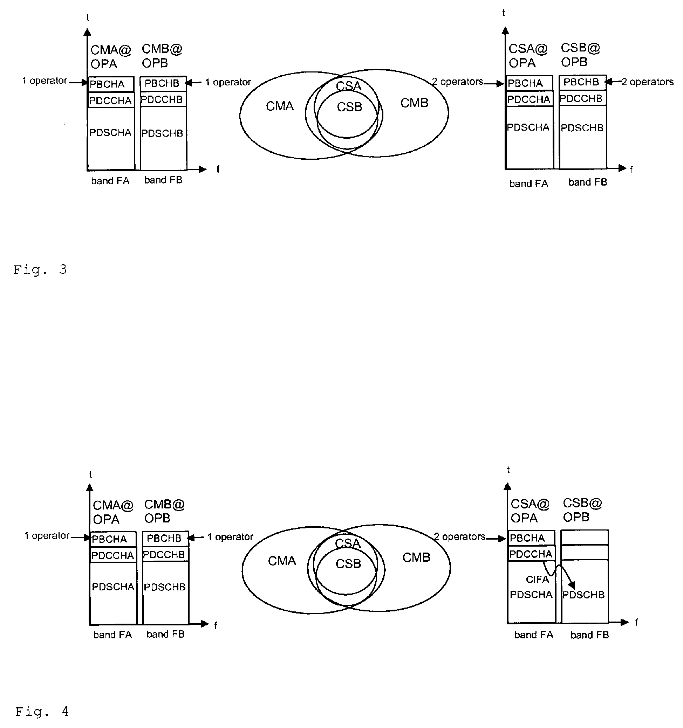

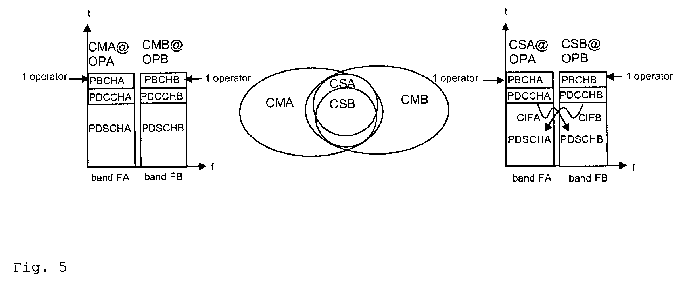

In the sequel, methods for resource sharing between operators in a wireless communication network as depicted in fig. 1 are described according to the state of the art in figs. 3 and 4, and according to an embodiment of the invention in fig. 5.

Fig. 3 schematically shows state of the art resource sharing for two operators with separate schedulers.

In the middle of fig. 3, the coverage areas of the macro cells CMA and CMB served by the macro base station MA of a first operator OPA and the macro base station MB of a second operator OPB are depicted. In the region where the two coverage areas are overlapping, also the coverage area of a small cell CSA of the first operator OPA and the coverage area of a small cell CSB of the second operator OPB are depicted.

On the left in fig. 3, different channels are depicted for the macro cell CMA of the first operator OPA in the frequency band FA, and for the macro cell CMB of the second operator OPB in the frequency band FB. First, transmission on a Physical Broadcast Channel PBCHA and PBCHB respectively is performed comprising an indication of the respective operator OPA or OPB, as e.g. the so-called Public Land Mobile Network identifier (PLMN ID) of the respective operator OPA or OPB. Thus, in the macro cell CMA of the first operator OPA, on the Physical Broadcast Channel PBCHA, an indication of the operator OPA is transmitted, and in the macro cell CMB of the second operator OPB, on the Physical Broadcast Channel PBCHB, an indication of the operator OPB is transmitted. Only user terminals registered at the indicated operator OPA are allowed to get access to the macro cell CMA, and only user terminals registered at the indicated operator OPB are allowed to get access to the macro cell CMB. Then, in the macro cell CMA on the frequency band FA, transmissions on a Physical Downlink Control Channel PDCCHA and on a Physical Downlink Shared Channel PDSCHA are performed, and in the macro cell CMB on the frequency band FB, transmissions on a Physical Downlink Control Channel PDCCHB and on a Physical Downlink Shared Channel PDSCHB are performed.

On the right in fig. 3, different channels are depicted for the small cell CSA of the first operator OPA in the frequency band FA, and for the small cell CSB of the second operator OPB in the frequency band FB. First, transmission on a Physical Broadcast Channel PBCHA and PBCHB respectively is performed comprising an indication of both operators OPA and OPB, as e.g. the so-called Public Land Mobile Network identifiers (PLMN ID) of the operators OPA and OPB, in each broadcast channel PBCHA and PBCHB. Thus, in the small cell CSA of the first operator OPA, on the Physical Broadcast Channel PBCHA, an indication of both operators OPA and OPB is transmitted, and in the small cell CSB of the second operator OPB, on the Physical Broadcast Channel PBCHB, also an indication of both operators OPA and OPB is transmitted.

Both, user terminals registered at the indicated operator OPA, and user terminals registered at the indicated operator OPB are allowed to get access to the small cells CSA and CSB. Then, in the small cell CSA on the frequency band FA, transmissions on a Physical Downlink Control Channel PDCCHA and on a Physical Downlink Shared Channel PDSCHA are performed, and in the small cell CSB on the frequency band FB, transmissions on a Physical Downlink Control Channel PDCCHB and on a Physical Downlink Shared Channel PDSCHB are performed.

However, user terminals getting access to the small cell CSA of operator OPA can only be scheduled to a Physical Downlink Shared Channel PDSCHA in the frequency band FA, and user terminals getting access to the small cell CSB of operator OPB can only be scheduled to a Physical Downlink Shared Channel PDSCHB in the frequency band FB, i.e. no carrier aggregation is performed.

In this scenario, there are two separate schedulers in the small cells CSA and CSB of the 2 operators OPA and OPB, enabling a kind of national roaming, as both frequency bands FA and FB allow access of user terminals with a subscription to operator OPA or operator OPB, as within the Broadcast Control Channel (BCCH) of both small cells CSA and CSB, two operator IDs are included. This solution is however not sufficient with respect to the efficient radio resource management, as no so-called resource pooling is used in the small cells CSA and CSB.

Fig. 4 schematically shows state of the art resource sharing for two operators OPA and OPB with one scheduler and carrier aggregation.

The coverage areas of macro cells CMA and CMB and small cells CSA and CSB depicted in the middle of fig. 4 are as depicted in the middle of fig. 3 and described above.

The different channels depicted for the macro cell CMA of the first operator OPA in the frequency band FA, and for the macro cell CMB of the second operator OPB in the frequency band FB on the left in fig. 4 are as depicted on the left in fig. 3 and described above.

On the right in fig. 4, different channels are depicted for the small cell CSA of the first operator OPA in the frequency band FA, and for the small cell CSB of the second operator OPB in the frequency band FB. First, transmission on a Physical Broadcast Channel PBCHA only in the small cell CSA of the first operator OPA is performed comprising an indication of both operators OPA and OPB, as e.g. the so-called Public Land Mobile Network identifiers (PLMN ID) of the operators OPA and OPB. Thus, in the small cell CSA of the first operator OPA, on the Physical Broadcast Channel PBCHA, an indication of both operators OPA and OPB is transmitted, and in the small cell CSB of the second operator OPB, neither a Physical Broadcast Channel PBCHB, nor a Physical Downlink Control Channel PDCCHB is available for transmission.

Both, user terminals registered at the indicated operator OPA, and user terminals registered at the indicated operator OPB are allowed to get access to the small cell CSA. Then, in the small cell CSA on the frequency band FA, transmissions on a Physical Downlink Control Channel PDCCHA are performed. The Physical Downlink Control Channel PDCCHA comprises an indicator CIFA for allocation of resources on a Physical Downlink Shared Channel PDSCHA of the operator OPA in the frequency band FA, or for allocation of resources on a Physical Downlink Shared Channel PDSCHB of the operator OPB in the frequency band FB. Said indicator CIFA can e.g. be a so-called carrier indicator field. Both, user terminals registered at the indicated operator OPA, and user terminals registered at the indicated operator OPB can thus be scheduled on resources on a Physical Downlink Shared Channel PDSCHA of the operator OPA in the frequency band FA, or on resources on a Physical Downlink Shared Channel PDSCHB of the operator OPB in the frequency band FB, i.e. carrier aggregation is performed.

In this case, the operators OPA and OPB share the complete radio access network. With the help of so-called carrier aggregation, the two carriers, i.e. frequency bands FA and FB, can be combined in the small cell coverage area to serve the user terminals of both operators OPA and OPB using the aggregated frequency resources. For this purpose, only one carrier can be assigned as a so-called primary component carrier (PCC) and the other can be used as a so-called secondary component carrier (SCC). With the help of cross carrier scheduling, a common scheduler with a BCCH only on the PCC utilizes the complete spectrum and allocates the resource to the user terminals of both operators OPA and OPB. This solution could be seen as sufficient with respect to an efficient radio resource management, as resource pooling is used. However, it does not guarantee the fairness between the operators OPA and OPB. Let the carrier from the operator OPA be taken as PCC and the carrier from the operator OPB serve as SCC. In this case, the handover of user terminals of the macro cell CMA of operator OPA to the small cell CSA will be an intra-frequency handover, as broadcast and control channels are transmitted on the carrier of operator OPA in the small cell CSA. On the other hand, the handover of user terminals of the macro cell CMB of the operator OPB to the small cell CSB will be an inter-frequency handover, as broadcast and control channels are only transmitted on the carrier of operator OPA, i.e. on the frequency band FA. Thus, the operator OPB has to bear high costs for the resource sharing by configuring its user terminals for inter-frequency measurements, i.e. measurement gaps are required for measurement of the frequency band FA of the other operator OPA.

Fig. 5 schematically shows resource sharing for two operators with one scheduler, carrier aggregation, and separate broadcast and control channels according to an embodiment of the invention.

In fig. 5, a method for resource sharing between operators in a wireless communication network as depicted in fig. 1 leading to a good and flexible usage of the common frequency resources and at the same time maintaining the fairness between both operators is depicted.

The coverage areas of macro cells CMA and CMB and small cells CSA and CSB depicted in the middle of fig. 5 are as depicted in the middle of fig. 3 and described above.

The different channels depicted for the macro cell CMA of the first operator OPA in the frequency band FA, and for the macro cell CMB of the second operator OPB in the frequency band FB on the left in fig. 5 are as depicted on the left in fig. 3 and described above.

On the right in fig. 5, different channels are depicted for the small cell CSA of the first operator OPA in the frequency band FA, and for the small cell CSB of the second operator OPB in the frequency band FB. First, transmission on a Physical Broadcast Channel PBCHA is performed comprising an indication of the operator OPA, as e.g. the so-called Public Land Mobile Network identifier (PLMN ID) of the operator OPA, in the broadcast channel PBCHA, and transmission on a Physical Broadcast Channel PBCHB is performed comprising an indication of the operator OPB, as e.g. the so-called Public Land Mobile Network identifier (PLMN ID) of the operator OPB, in the broadcast channel PBCHB.

Thus, user terminals registered at the indicated operator OPA are allowed to get access to the small cell CSA, and user terminals registered at the indicated operator OPB are allowed to get access to the small cell CSB. Then, in the small cell CSA on the frequency band FA, transmissions on a Physical Downlink Control Channel PDCCHA are performed. The Physical Downlink Control Channel PDCCHA comprises an indicator CIFA for allocation of resources on a Physical Downlink Shared Channel PDSCHA of the operator OPA in the frequency band FA, or for allocation of resources on a Physical Downlink Shared Channel PDSCHB of the operator OPB in the frequency band FB. Said indicator CIFA can e.g. be a so-called carrier indicator field. User terminals registered at the indicated operator OPA can be scheduled on resources on a Physical Downlink Shared Channel PDSCHA of the operator OPA in the frequency band FA, or on resources on a Physical Downlink Shared Channel PDSCHB of the operator OPB in the frequency band FB, i.e. carrier aggregation is performed. In an analogue way, in the small cell CSB on the frequency band FB, transmissions on a Physical Downlink Control Channel PDCCHB are performed. The Physical Downlink Control Channel PDCCHB comprises an indicator CIFB for allocation of resources on a Physical Downlink Shared Channel PDSCHA of the operator OPA in the frequency band FA, or for allocation of resources on a Physical Downlink Shared Channel PDSCHB of the operator OPB in the frequency band FB. Said indicator CIFB can e.g. be a so-called carrier indicator field. User terminals registered at the indicated operator OPB can be scheduled on resources on a Physical Downlink Shared Channel PDSCHA of the operator OPA in the frequency band FA, or on resources on a Physical Downlink Shared Channel PDSCHB of the operator OPB in the frequency band FB, i.e. carrier aggregation is performed.

In a preferred embodiment of the invention, it is proposed to have two PCC, one for each operator OPA and OPB in the small cell coverage area using a common hardware with two different cell IDs and two BCCHs for the two operators OPA and OPB. Using the carrier aggregation and cross carrier scheduling as depicted in fig. 5 and described above, a common small cell scheduler will serve the user terminals of both operators OPA and OPB.

If a user terminal of operator OPB served by the macro cell CMB moves towards the small cell CSB, it can perform intra-frequency measurements on the PCC in the frequency band FB, which is the same as the carrier of operator OPB in the macro cell CMB. Once said user terminal of operator OPB is associated with the small cell CSB, all its signalling can be carried over the PCC in the frequency band FB. However, user data can be scheduled over the complete spectrum using the carrier aggregation feature, i.e. over the frequency bands FA and FB. An analogue handover procedure is possible for a user terminal of operator OPA served by the macro cell CMA moving towards the small cell CSA.

With the above-described method according to an embodiment of the invention, the small cells CSA and CSB utilize the resource pooling, i.e. wider spectrum gain, and at the same time maintain the fairness between both operators OPA and OPB, as due to the PCC on each carrier for each operator, user terminals served by a macro base station CMA or CMB from the operator OPA or OPB will perform simply an intra-frequency measurement and handover, as broadcast and control channels are transmitted on the carrier of the respective operator OPA and OPB in the respective small cell CSA and CSB. In this way both operators will benefit from a wider spectrum and both will benefit from reduced re-configurations on the RRC layer.

In the embodiments described above and depicted in fig. 5, the corresponding processing steps can be performed e.g. in the modem unit boards MU1-MU3 and the control unit board CU1 of a pico base station of the small cells CSA and CSB, and in the modem unit board MU4 and the control unit board CU2 of the user terminals UE_A_MA, UE_B_MB, UE_A_S and UE_B_S as depicted in figs. 1, 2 and 5, and described above.

A comparative tabular analysis of the embodiment of the invention depicted in fig. 5 and the state of the art solutions depicted in figs. 3 and 4 for resource sharing in the small cells CSA and CSB is summarized in the following table.

| | #Cell IDs / #BCCHs | operator specific UE handling e.g. signalling in shared cell or measurement configurations | #Operators in BCCH | Need of Inter-freq. handover measurements | Operator specific settings kept (measurements, mobility) | Pooling gain | #Schedulers | #Hardware boxes |
|---|---|---|---|---|---|---|---|---|
| Fig. 3 | 2 | - | 2 | XX | X | - | 2 | 1 |
| Fig. 4 | 1 | - | 2 | X | - | X | 1 | 1 |
| Fig. 5 | 2 | X | 1 | - | X | X | 1 | 1 |

- The state of the art solution in fig. 3, and the embodiment of the invention in fig. 5 both have two cell IDs and BCCHs respectively for the small cells CSA and CSB, whereas the state of the art solution in fig. 4 has only one cell ID and BCCH for the small cells CSA and CSB.
- The state of the art solutions in figs. 3 and 4 do not offer an operator specific user terminal handling, as e.g. all user terminals must perform the same handover measurements on the same frequency bands. The embodiment of the invention in fig. 5 however offers an operator specific user terminal handling, as e.g. user terminals of operator OPA perform handover measurements in the frequency band FA, whereas user terminals of operator OPB perform handover measurements in the frequency band FB.
- The state of the art solutions in figs. 3 and 4 signal two operator IDs per BCCH in the small cells CSA and CSB, whereas the embodiment of the invention in fig. 5 signals only one operator ID per BCCH in the small cells CSA and CSB.
- In the state of the art solutions in figs. 3 and 4, there is a need for inter-frequency handover measurements, as at least user terminals from one operator must perform measurements in a frequency band of the other operator. In the embodiment of the invention in fig. 5 however, only intra-frequency handover measurements must be performed, i.e. the user terminals only perform measurements in the frequency band of their own operator, which is of course more resource effective.
- In the state of the art solution in fig. 3, and in the embodiment of the invention in fig. 5, operator specific settings for measurements and mobility can be kept, as e.g. handover measurements and handovers of user terminals can be restricted to frequency bands and cells of the own operator. In the state of the art solution in fig. 4 however, at least the user terminals of one operator must perform handover measurements in frequency bands of another operator and thus, operator specific settings for measurements and mobility cannot be kept.
- In the state of the art solution in fig. 3, no pooling gain is achieved, as no carrier aggregation of frequency bands FA and FB is performed for scheduling user terminals, whereas in the state of the art solution in fig. 4, and in the embodiment of the invention in fig. 5, carrier aggregation of frequency bands FA and FB is performed, and thus, a pooling gain is achieved.
- In the state of the art solution in fig. 3, a separate scheduler for each of the small cells CSA and CSB is used, whereas in the state of the art solution in fig. 4, and in the embodiment of the invention in fig. 5, a common scheduler for both small cells CSA and CSB can be used.
- In both state of the art solutions in figs. 3 and 4, and in the embodiment of the invention in fig. 5 only 1 hardware box, as e.g. only one LTE pico base station can be used for implementing the functionalities of both small cells CSA and CSB.

## Claims

1. A method for allocation of frequency resources (FA, FB) of different operators (OPA, OPB) to user terminals (UE_A_S, UE_B_S) in a wireless communication network (CN), wherein
• on at least one frequency resource (FA, FB) of each operator (OPA, OPB) of said different operators, an indication of said operator allowing user terminals (UE_A_S, UE_B_S) registered at said operator (OPA, OPB) to get access to a signaled cell (CS, CSA, CSB) is transmitted on a broadcast channel (PBCHA, PBCHB),
• user terminals (UE_A_S, UE_B_S) receive control information only on frequency resources (FA, FB) of an operator (OPA, OPB) at which the user terminals (UE_A_S, UE_B_S) are registered, **characterised in that**
• said control information comprises an indicator (CIFA, CIFB) allocating to the user terminals (UE_A_S, UE_B_S) at least one frequency resource (FA, FB) of said frequency resources of an operator (OPA, OPB) at which the user terminals (UE_A_S, UE_B_S) are not registered.

2. A method according to claim 1, wherein a common scheduler for at least two operators (OPA, OPB) of said different operators is used for the allocation of the frequency resources (FA,FB) of said at least two operators (OPA, OPB).

3. A method according to claim 1 or 2, wherein said allocation of the frequency resources (FA, FB) of the different operators (OPA, OPB) to the user terminals (UE_A_S, UE_B_S) is performed in a small cell (CS, CSA, CSB) that is shared between said different operators (OPA, OPB).

4. A method according to any of the preceding claims, wherein each of said different operators (OPA, OPB) uses at least one of a group of a dedicated cell identifier and a dedicated broadcast channel (PBCHA, PBCHB).

5. A method according to any of the preceding claims, wherein the indicator (CIFA, CIFB) allocating to the user terminals (UE_A_S, UE_B_S) at least one frequency resource (FA, FB) of said frequency resources of an operator (OPA, OPB) at which the user terminals (UE_A_S, UE_B_S) are not registered is comprised in a carrier indicator field of a control channel (PDCCHA, PDCCHB).

6. A method according to any of the preceding claims, wherein at least one frequency resource (FA, FB) of an operator (OPA, OPB) of said different operators is used as primary component carrier for said operator, and at least one frequency resource (FA, FB) of at least one further operator (OPA, OPB) of said different operators is used as secondary component carrier.

7. A method according to claim 3, wherein a user terminal (UE_A_MA, UE_B_MB) performs handover measurements for performing a handover to the small cell (CS, CSA, CSB) only on frequency resources (FA, FB) of the operator (OPA, OPB) at which it is registered.

8. A base station (S, BS) for allocation of frequency resources (FA, FB) of different operators (OPA, OPB) to user terminals (UE_A_S, UE_B_S), wherein said base station (S, BS) is adapted
• to transmit on a broadcast channel (PBCHA, PBCHB) on at least one frequency resource (FA, FB) of each operator (OPA, OPB) of said different operators an indication of said operator (OPA, OPB) allowing user terminals (UE_A_S, UE_B_S) registered at said operator (OPA, OPB) to get access to a signaled cell (CS, CSA, CSB),
• and to transmit control information to user terminals (UE_A_S, UE_B_S) only on frequency resources (FA, FB) of an operator (OPA, OPB) at which said user terminals (UE_A_S, UE_B_S) are registered, **characterised by** said control information comprising an indicator (CIFA, CIFB) allocating to the user terminals (UE_A_S, UE_B_S) at least one frequency resource (FA, FB) of said frequency resources of an operator (OPA, OPB) at which the user terminals (UE_A_S, UE_B_S) are not registered.

9. A user terminal (UE_A_S, UE_B_S) to which frequency resources (FA, FB) of different operators (OPA, OPB) can be allocated, wherein said user terminal (UE_A_S, UE_B_S) is adapted to
• receive on at least one frequency resource (FA, FB) of an operator (OPA, OPB) of said different operators at which the user terminal (UE_A_S, UE_B_S) is registered an indication of said operator (OPA, OPB) on a broadcast channel (PBCHA, PBCHB) allowing the user terminal (UE_A_S, UE_B_S) to get access to a signaled cell (CS, CSA, CSB),
• and receive control information only on frequency resources (FA, FB) of the operator (OPA, OPB) at which the user terminal (UE_A_S, UE_B_S) is registered, **characterised by** said control information comprising an indicator (CIFA, CIFB) allocating to the user terminal (UE_A_S, UE_B_S) at least one frequency resource (FA, FB) of said frequency resources of an operator (OPA, OPB) at which the user terminal (UE_A_S, UE_B_S) is not registered.

10. A communication network (CN) for mobile communication comprising at least one base station (S, BS) according to claim 8.

## Patentansprüche

1. Verfahren für die Zuweisung von Frequenzressourcen (FA, FB) unterschiedlicher Betreiber (OPA, OPB) an Benutzerendgeräte (UE_A_S, UE_B_S) in einem drahtlosen Kommunikationsnetzwerk (CN), wobei
• auf mindestens einer Frequenzressource (FA, FB) eines jeden Betreibers (OPA, OPB) der besagten Betreiber über einen Broadcast-Kanal (PBCHA, PBCHB) eine Angabe besagten Betreibers übermittelt wird, die es bei besagtem Betreiber (OPA, OPB) registrierten Benutzerendgeräten (UE_A_S, UE_B_S) erlaubt, Zugang zu einer signalisierten Zelle (CS, CSA, CSB) zu erhalten,
• Benutzerendgeräte (UE_A_S, UE_B_S) Steuerinformationen nur auf Frequenzressourcen (FA, FB) eines Betreibers (OPA, OPB) empfangen, bei welchem die Benutzerendgeräte (UE_A_S, UE_B_S) registriert sind, **dadurch gekennzeichnet, dass**
• besagte Steuerinformationen einen Indikator (CIFA, CIFB) umfassen, der dem Benutzerendgeräten (UE_A_S, UE_B_S) mindestens eine Frequenzressource (FA, FB) der besagten Frequenzressourcen eines Betreibers (OPA, OPB) zuweisen, bei welchem die Benutzerendgeräte (UE_A_S, UE_B_S) nicht registriert sind.

2. Verfahren nach Anspruch 1, wobei ein gemeinsamer Planer für mindestens zwei Betreiber (OPA, OPB) besagter verschiedener Betreiber für die Zuweisung der Frequenzressourcen (FA, FB) besagter mindestens zwei Betreiber (OPA, OPB) verwendet wird.

3. Verfahren nach Anspruch 1 oder 2, wobei besagte Zuweisung der Frequenzressourcen (FA, FB) der verschiedenen Betreiber (OPA, OPB) an die Benutzerendgeräte (UE_A_S, UE_B_S) in einer Kleinzelle (CS, CSA, CSB) ausgeführt wird, die sich die besagten verschiedenen Betreiber (OPA, OPB) teilen.

4. Verfahren nach einem beliebigen der vorgenannten Ansprüche, wobei jeder der besagten Betreiber (OPA, OPB) mindestens einen aus einer Gruppe dedizierter Zellidentifikatoren und einen dedizierten Broadcast-Kanal (PBCHA, PBCHB) benutzt.

5. Verfahren nach einem beliebigen der vorgenannten Ansprüche, wobei der Indikator (CIFA, CIFB), welcher den Benutzerendgeräten (UE_A_S, UE_B_S) mindestens eine Frequenzressource (FA, FB) besagter Frequenzressourcen eines Betreibers (OPA, OPB) zuweist, bei dem die Benutzerendgeräte (UE_A_S, UE_B_S) nicht registriert sind, in einem Trägerindikatorfeld eines Steuerkanals (PDCCHA, PDCCHB) enthalten ist.

6. Verfahren nach einem beliebigen der vorgenannten Ansprüche, wobei mindestens eine Frequenzressource (FA, FB) eines Betreibers (OPA, OPB) besagter verschiedener Betreiber als primärer Komponententräger für besagten Betreiber und mindestens eine Frequenzressource (FA, FB) mindestens eines weiteren Betreibers (OPA, OPB) besagter verschiedener Betreiber als sekundärer Komponententräger verwendet wird.

7. Verfahren nach Anspruch 3, wobei ein Benutzerendgerät (UE_A_MA, UE_B_MB) Weiterleitungsmessungen für die Durchführung einer Weiterleitung zu der Kleinzelle (CS, CSA, CSB) nur auf Frequenzressourcen (FA, FB) desjenigen Betreibers (OPA, OPB) durchführt, bei dem es registriert ist.

8. Basisstation (S, BS) für das Zuweisen von Frequenzressourcen (FA, FB) verschiedener Betreiber (OPA, OPB) an Benutzerendgeräte (UE_A_S, UE_B_S), wobei besagte Basisstation (S, BS) ausgelegt ist
• für das Übermitteln über einen Broadcast-Kanal (PBCHA, PBCHB) auf mindestens einer Frequenzressource (FA, FB) eines jeden Betreibers (OPA, OPB) der besagten Betreiber einer Angabe besagten Betreibers (OPA, OPB), die es bei besagtem Betreiber (OPA, OPB) registrierten Benutzerendgeräten (UE_A_S, UE_B_S) erlaubt, Zugang zu einer signalisierten Zelle (CS, CSA, CSB) zu erhalten,
• und für das Übermitteln von Steuerinformationen an Benutzerendgeräte (UE_A_S, UE_B_S) nur auf Frequenzressourcen (FA, FB) eines Betreibers (OPA, OPB), bei dem besagte Benutzerendgeräte (UE_A_S, UE_B_S) registriert sind, **dadurch gekennzeichnet, dass** besagte Steuerinformationen einen Indikator (CIFA, CIFB) umfassen, welcher den Benutzerendgeräten (UE_A_S, UE_B_S) mindestens eine Frequenzressource (FA, FB) besagter Frequenzressourcen eines Betreibers (OPA, OPB) zuweist, bei welchem die Benutzerendgeräte (UE_A_S, UE_B_S) nicht registriert sind.

9. Benutzerendgerät (UE_A_S, UE_B_S), dem Frequenzressourcen (FA, FB) verschiedener Betreiber (OPA, OPB) zugewiesen werden können, wobei besagtes Benutzerendgerät (UE_A_S, UE_B_S) ausgelegt ist
• für das Empfangen einer Angabe besagten Betreibers (OPA, OPB) über einen Broadcast-Kanal (PBCHA, PBCHB) auf mindestens einer Frequenzressource (FA, FB) eines Betreibers (OPA, OPB) besagter verschiedener Betreiber, bei welchem das Benutzerendgerät (UE_A_S, UE_B_S) registriert ist, wobei es besagte Angabe dem Benutzerendgerät (UE_A_S, UE_B_S) erlaubt, Zugang zu einer signalisierken Zelle (CS, CSA, CSB) zu erhalten, und
• für das Empfangen von Steuerinformationen nur auf Frequenzressourcen (FA, FB) des Betreibers (OPA, OPB), bei dem besagtes Benutzerendgerät (UE_A_S, UE_B_S) registriert ist, dadurch gelsennzeichnet, dass besagte Steuerinformationen einen indikator (CIFA, CIFB) umfassen, welcher dem Benutzerendgerät (UE_A_S, UE_B_S) mindestens eine Frequenzressource (FA, FB) besagter Frequenzressourcen eines Betreibers (OPA, OPB) zuweist, bei welchem die Benutzerendgeräte (UE_A_S, UE_B_S) nicht registriert sind.

10. Kommunikationsnetzwerk (CN) für die mobile Kommunikation, mindestens eine Basisstation (S, BS) nach Anspruch 8 umfassend.

## Revendications

1. Procédé d'attribution de ressources de fréquence (FA, FB) de différents opérateurs (OPA, OPB) à des terminaux d'utilisateur (UE_A_S, UE_B_S) dans un réseau de communication sans fil (CN), selon lequel
• sur au moins une ressource de fréquence (FA, FB) de chaque opérateur (OPA, OPB) desdits différents opérateurs, une indication dudit opérateur permettant aux terminaux d'utilisateur (UE_A_S, UE_B_S) enregistrés auprès dudit opérateur (OPA, OPB) d'avoir accès à une cellule signalée (CS, CSA, CSB) est émise sur un canal de diffusion (PBCHA, PBCHB),
• les terminaux d'utilisateur (UE_A_S, UE_B_S) reçoivent des informations de commande uniquement sur les ressources de fréquence (FA, FB) d'un opérateur (OPA, OPB) auprès duquel les terminaux d'utilisateur (UE_A_S, UE_B_S) sont enregistrés, **caractérisé en ce que**
• lesdites informations de commande comprennent un indicateur (CIFA, CIFB) attribuant aux terminaux d'utilisateur (UE_A_S, UE_B_S) au moins une ressource de fréquence (FA, FB) desdites ressources de fréquence d'un opérateur (OPA, OPB) auprès duquel les terminaux d'utilisateur (UE_A_S, UE_B_S) ne sont pas enregistrés.

2. Procédé selon la revendication 1, selon lequel un ordonnanceur commun pour au moins deux opérateurs (OPA, OPB) desdits différents opérateurs est utilisé pour l'attribution des ressources de fréquence (FA, FB) desdits au moins deux opérateurs (OPA, OPB).

3. Procédé selon la revendication 1 ou 2, selon lequel ladite attribution des ressources de fréquence (FA, FB) des différents opérateurs (OPA, OPB) aux terminaux d'utilisateur (UE_A_S, UE_B_S) est effectuée dans une petite cellule (CS, CSA, CSB) qui est partagée entre lesdits différents opérateurs (OPA, OPB).

4. Procédé selon l'une quelconque des revendications précédentes, selon lequel chacun desdits différents opérateurs (OPA, OPB) utilise au moins un parmi un groupe d'un identifiant de cellule dédiée et d'un canal de diffusion dédié (PBCHA, PBCHB).

5. Procédé selon l'une quelconque des revendications précédentes, selon lequel l'indicateur (CIFA, CIFB) attribuant aux terminaux d'utilisateur (UE_A_S, UE_B_S) au moins une ressource de fréquence (FA, FB) desdites ressources de fréquence d'un opérateur (OPA, OPB) auprès duquel les terminaux d'utilisateur (UE_A_S, UE_B_S) ne sont pas enregistrés est contenu dans un champ indicateur de porteuse d'un canal de commande (PDCCHA, PDCCHB).

6. Procédé selon l'une quelconque des revendications précédentes, selon lequel au moins une ressource de fréquence (FA, FB) d'un opérateur (OPA, OPB) desdits différents opérateurs est utilisée comme porteuse de composant primaire pour ledit opérateur et au moins une ressource de fréquence (FA, FB) d'au moins un opérateur (OPA, OPB) supplémentaire desdits différents opérateurs est utilisée comme porteuse de composant secondaire.

7. Procédé selon la revendication 3, selon lequel un terminal d'utilisateur (UE_A_MA, UE_B_MB) effectue des mesures de transfert pour effectuer un transfert vers la petite cellule (CS, CSA, CSB) uniquement sur les ressources de fréquence (FA, FB) de l'opérateur (OPA, OPB) auprès duquel il est enregistré.

8. Station de base (S, BS) pour l'attribution de ressources de fréquence (FA, FB) de différents opérateurs (OPA, OPB) à des terminaux d'utilisateur (UE_A_S, UE_B_S), ladite station de base (S, BS) étant adaptée
• pour émettre sur un canal de diffusion (PBCHA, PBCHB) sur au moins une ressource de fréquence (FA, FB) de chaque opérateur (OPA, OPB) desdits différents opérateurs une indication dudit opérateur (OPA, OPB) permettant aux terminaux d'utilisateur (UE_A_S, UE_B_S) enregistrés auprès dudit opérateur (OPA, OPB) d'avoir accès à une cellule signalée (CS, CSA, CSB),
• et pour émettre des informations de commande aux terminaux d'utilisateur (UE_A_S, UE_B_S) uniquement sur les ressources de fréquence (FA, FB) d'un opérateur (OPA, OPB) auprès duquel les terminaux d'utilisateur (UE_A_S, UE_B_S) sont enregistrés, **caractérisée en ce que** lesdites informations de commande comprennent un indicateur (CIFA, CIFB) attribuant aux terminaux d'utilisateur (UE_A_S, UE_B_S) au moins une ressource de fréquence (FA, FB) desdites ressources de fréquence d'un opérateur (OPA, OPB) auprès duquel les terminaux d'utilisateur (UE_A_S, UE_B_S) ne sont pas enregistrés.

9. Terminal d'utilisateur (UE_A_S, UE_B_S) auquel peuvent être attribuées des ressources de fréquence (FA, FB) de différents opérateurs (OPA, OPB), ledit terminal d'utilisateur (UE_A_S, UE_B_S) étant adapté pour
• recevoir sur au moins une ressource de fréquence (FA, FB) d'un opérateur (OPA, OPB) desdits différents opérateurs auprès duquel le terminal d'utilisateur (UE_A_S, UE_B_S) est enregistré une indication dudit opérateur (OPA, OPB) sur un canal de diffusion (PBCHA, PBCHB) permettant au terminal d'utilisateur (UE_A_S, UE_B_S) d'avoir accès à une cellule signalée (CS, CSA, CSB),
• et recevoir des informations de commande uniquement sur les ressources de fréquence (FA, FB) de l'opérateur (OPA, OPB) auprès duquel le terminal d'utilisateur (UE_A_S, UE_B_S) est enregistré, **caractérisée en ce que** lesdites informations de commande comprennent un indicateur (CIFA, CIFB) attribuant aux terminaux d'utilisateur (UE_A_S, UE_B_S) au moins une ressource de fréquence (FA, FB) desdites ressources de fréquence d'un opérateur (OPA, OPB) auprès duquel le terminal d'utilisateur (UE_A_S, UE_B_S) n'est pas enregistré.

10. Réseau de communication (CN) pour la communication mobile comprenant au moins une station de base (S, BS) selon la revendication 8.
